# EUROPEAN PATENT APPLICATION

(11) **EP 4 201 610 A1**
(43) Date of publication of application: **28.06.2023**
(21) Application number: 22208469.1
(22) Date of filing: 21.11.2022
(51) Int. Cl.: B25J 18/00, B25J 18/06, B25J 9/06

(54) **CONTINUUM ROBOT STIFFENING**

(30) Priority: 21.12.2021 GB 202118623
(71) Applicant: Rolls-Royce plc, London N1 9FX (GB)
(72) Inventor: Norton, Andrew, Derby, DE24 8BJ (GB); Russo, Matteo, Derby, DE24 8BJ (GB); Dong, Xin, Derby, DE24 8BJ (GB)
(74) Representative: Rolls-Royce plc

(57) **Abstract**

A rigid link for a flexible robot, the rigid link comprising a rigid link body having a hollow core, the rigid link being provided with at least two arms having proximal and distal ends, the arms are connected to the rigid link body, and wherein the arms being deployable between a closed configuration in which the proximal and distal ends of the arms are positioned proximate to the rigid link body and open configuration in which the arms are moved so that the distal ends of the arms are positioned away from the body of the rigid link.

## Description

### Overview of the Disclosure

The disclosure relates to a means of stiffening a flexible arm robot. In particular the disclosure relates to a means of stiffening sections of flexible arm robots via means of compliant tendrils that extend from the core of the rigid link.

### Background of the disclosure

Continuum arm or snake arm robots are of growing interest in a number of applications. This is because the robots can be manipulated into spaces in which other robotic systems or human operators cannot readily access. This is due to the ability to manipulate the body with a number of degrees of freedom so that the end tool can be positioned accurately and easily. This positioning is controlled by actuators which manipulate the tendons within the robot so that each joint of the arm can be individually controlled to within a high degree of positional accuracy.

Most robotic arm systems have 6 degrees of freedom or less. However, if a task requires a greater amount of dexterity the number of degrees of freedom required is increased. This increase in the number of degrees of freedom means that the arms are able to operate in confined areas, for example in maintenance of complex structures or for use in minimally invasive surgery. Continuum arm robots are designed along two main paths: Firstly, there are snake-like robots, which consist of multiple rigid-link sections that are connected by either a rigid R/U/S (Revolute/Universal/Spherical) joints or by a compliant joint. Each section is composed of one or more segments and controlled independently from the others with on-board or remote actuation. Secondly, there are continuum robots, which consist of a compliant backbone whose local and global deformation is controlled by one or more actuators.

Despite the functionality there are issues with the current designs of highly compliant robots, which result from the number of joints required in the robot arm. As a consequence of these joints the robot arm suffers from a low degree of stiffness when compared to conventional 6 degrees of freedom robots. This reduced stiffness results in a reduced load carrying capacity as well reducing the interaction that the arm can have with the environment within which it is operating. The current state of the art aims to overcome this by "freezing" the system through locking the actuator or by the addition of stiffening means to the backbone. This can work for shorter length robotic arms, however, when employed on longer length robots the arms act like long cantilever beams and the deflection of the beams causes significant position and navigation issues. This limits the use of such robots to lightweight tasks for risk of damaging the robot and/or the object that the robot is working on. Therefore, there is a requirement for an improved continuum arm robot system to overcome these issues.

### Summary of the Disclosure

According to a fist aspect of the disclosure there is provided a rigid link for a flexible robot, the rigid link comprising a rigid link body having a hollow core, the rigid link being provided with at least two arms having proximal and distal ends, the arms are connected to the rigid link body, and wherein the arms are deployable between a closed configuration in which the proximal and distal ends of the arms are positioned proximate to the rigid link body and open configuration in which the arms are moved so that the distal ends of the arms are positioned away from the body of the rigid link.

The arms may individually be controlled.

The arms may be individually deployable.

The arms may be opened such that they have a different distance between the distal end of the arm and the flexible robot body.

The proximal ends of the arms may be pivotably connected to the body of the rigid link.

The arms may be tendrils that have an elastic nature and can be shaped to curve when deployed.

The tendrils may be formed from nitinol and provided with notches along its length.

The body of the rigid link may be shaped so accommodate a portion of the arms along their length.

The arms may be extendable perpendicular to an axis parallel to the hollow core of the rigid link body.

The arms may be formed of a folding origami structure.

The arms may be actuated by a motor, a tendon, or a linear actuator.

The arms may be provided with a sensor.

The ends of the arms may be complaint, so that they do not damage the workspace.

The sensor may be used to determine the force applied between the arm and a workspace in which the flexible robot is operating.

The flexible robot may be a continuum arm robot.

The rigid link may be incorporated into the body of the continuum robot.

The rigid link may be positioned around the outside body of a continuum arm robot.

According to a second aspect of the disclosure there is provided a method of operating the flexible arm robot according to any one of the preceding claims, comprising:
inserting the flexible arm robot into a cavity of a workpiece until it reaches the desired positioning;
deploying the arms of the rigid link section from their closed position to their open position;
performing the desired task using the tip section of the flexible arm robot;
retracting the arms of the rigid link section from their open position to their closed position;
and extracting the flexible arm robot.

After retracting the arms of the rigid link section, the flexible arm robot may be repositioned and the arms are deployed to perform a further task before the arms are retracted again.

The skilled person will appreciate that except where mutually exclusive, a feature described in relation to any one of the above aspects may be applied mutatis mutandis to any other aspect. Furthermore, except where mutually exclusive any feature described herein may be applied to any aspect and/or combined with any other feature described herein.

### Brief Discussion of the Figures

Embodiments will now be described by way of example only, with reference to the Figures, in which:
Figure 1a presents a prior art example of a cut away of a continuum arm robot;
Figure 1B presents an example of the joints of a continuum arm robot;
Figure 2 presents example of the deflection of the continuum arm robot according to the prior art and the present disclosure;
Figure 3 presents an image of a rigid link for a continuum arm robot system according to the present disclosure;
Figure 4 presents an alternative image of a rigid link for a continuum arm robot system according to the present disclosure;
Figure 5a presents an image of a tendril arm in its closed configuration and Figure 5b presents an example of a tendril arm in its open configuration;
Figure 6 presents an alternative image of a rigid link for a continuum arm robot system according to the present disclosure;
Figure 7 presents a flow chart of the operation of the continuum arm robot according to the present disclosure.

### Detailed Disclosure

Aspects and embodiments of the present disclosure will now be discussed with reference to the accompanying figures. Further aspects and embodiments will be apparent to those skilled in the art.

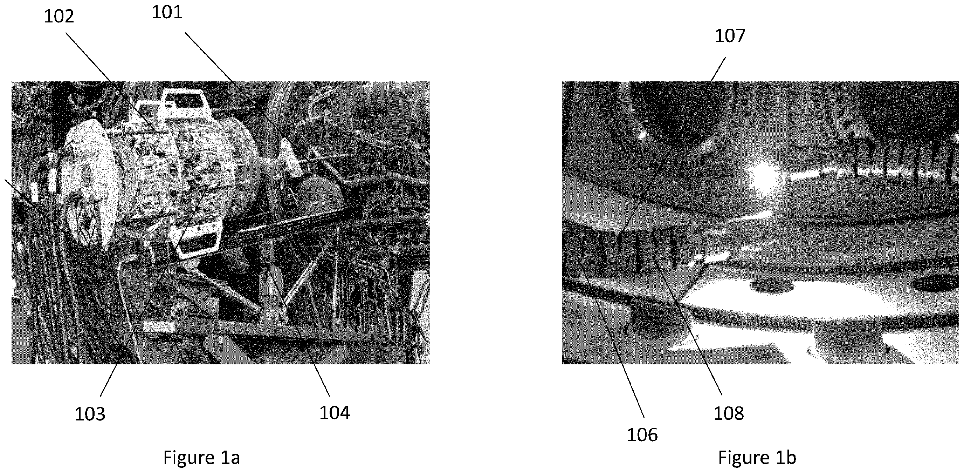

Figure 1a presents a prior art example of a cut away of a continuum arm robot. The prior art continuum arm robot comprises the continuum arm robot portion 101 permanently integrated and extending out from the actuator pack 102. The actuator pack 102 contains a plurality of independent actuators 103. These actuators are used to modulate the tension within the tendons that run through the continuum arm 101. The tendons are associated with joints within the arm; each of these joints is designed to move in response to a tensioning or relaxing of the tendon associated with the joint. This tensioning or relaxing of the tendon therefore causes a contraction or extension of the joint, which allows the continuum arm to bend. The actuator pack is shown being positioned on a rail or support 104, which is positioned close to the component to be inspected. The actuator is also provided with a plurality of power and signal cables 105 that are used to power and address the actuators. The individual signals across the range of actuators provide control of the joints such that the continuum arm 101 can be directed. Not shown in figure 1 is that there is also a need for an operator with a computing device that is linked to the actuator to control movement of the continuum arm and to perform the desired task. As the continuum arm is permanently integrated into the actuator pack if a different tool is required it requires the use of a complete continuum arm robot system including the actuator. The computing device that is connected to the prior art actuator may be any suitable computing system such as a laptop computer featuring the requisite operating software for the robot and a control input such as a joystick, which allows the continuum arm to be controlled.

Figure 1b shows an example of the joints of a continuum arm robot. The arm comprises multiple joints, which require at least 2 cables per joint. For example, a system having three joints, each having 4 tendons per joint will require 12 actuators to drive. To increase the number of joints either the number of actuators needs to be increased or the number of tendons per joint needs to be reduced. Highlighted joints 106, 107, 108 are able to be manipulated to move in three dimensions. The joints are configured so that joints 106 and 108 are able to be able to flex in the same plane relative to the centre of the arm, whilst the plane that joint 107 is able to move in is offset by 90° to joints 106 and 108. It is through this repeating configuration of alternating joint angles, each of which results in the movement in different orthogonal plane, that allows the arm to be manipulated in three dimensions. Each joint within the arm has a limit to the amount they are able to flex; this is defined by the design of the arm and the materials that are used. The limit of flex in each joint sets characteristics such as the minimum bending radius and the requirements for the torque that is required to cause a resultant change within the joint. It is the presence of the space in the joints that allows the joint to move and the ease of movement of the joint that results in a low stiffness of the arms in comparison to other robotic arms of the same length. This is because the structural behaviour of a snake-like robotic manipulator can be compared to a cantilever beam under load; this is because the system is fixed on one end to the base with actuation pack and the remainder of the arm is used to navigate through the environment without other points of contact. In this condition, every load applied on the body and/or the tip of the snake-like robot, including its own weight, imposes a significant deflection from the ideal position. At the end of the arm there is positioned a tool or probe that is designed to perform one or more functions once the continuum arm is in position. The heads of the continuum arm robots are often provided with optical systems so that the operator is able to view the head as it is being inserted into the component and to be control the head as it performs its tasks. The optical system is also frequently coupled to an illumination system. The control cables for the tool, electrical power connectors to the illuminations system and optical cables usually are able to run through the centre of the joints within the continuum arm. This has the benefit of protecting the cables form any potential damage.

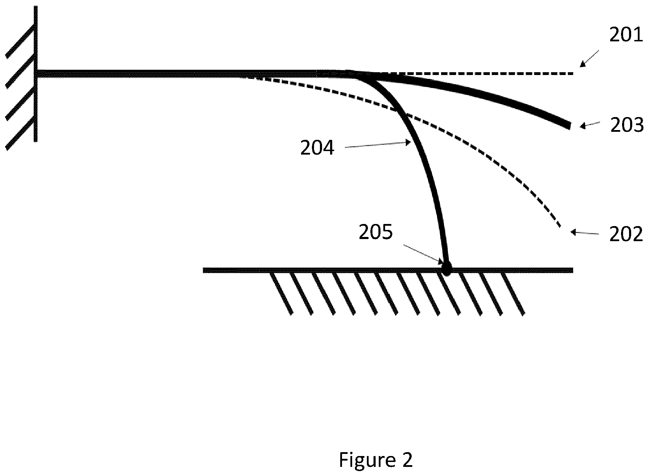

Figure 2 presents an example of the issue regarding the effect of loading on a compliant robotic device. In this the continuum arm robot extends into the desired workspace. Compliant robots typically consist of the manipulatable tip which consists of a number of moveable links each having a joint between them and a flexible connector that carries the cables that are required by the tip and the tool at the end. The flexible connector acts as a carrier to supply these cables and the compliant tip into the desired position within the workspace; this may be meters in distance from where the actuator sits that is used to control tip section and the tool. The structural behaviour of a snake-like robotic manipulator can be compared to that of a cantilever beam under load, since the system is fixed on one end to the base with actuation pack, power supply and/or control unit and is supposed to navigate through the environment without other point of contact. Figure 2 presents an idealised example of the operation. In this, the robot has an ideal straight configuration 201, every load applied on the body and/or the tip of the snake-like robot, including its own weight, imposes a significant deflection and deviation 202 from the ideal position 201. In this disclosure, the addition of an auxiliary mechanism 204 is used to add one or more points of contact 205 with the workspace environment - such as the wall of the cavity. Through the use of these contact points it is possible to reduce the deflection of the continuum arm robot. This is because the effect of the extra point of contact acts to reduce the length of the cantilever. Thus, the system obtains a more balanced configuration 203 which is closer to the ideal configuration 201. Therefore, this allows for a more accurate positioning of the continuum arm robot and the end effector so that it produces more reliable work configurations. Furthermore, the point(s) of contact can support a load on the tip with their reaction forces, thus, enabling the robot to perform greater intrusive intervention and maintenance techniques. This extra point of contact therefore acts to increase the utility of the robot by increasing the number of tasks that can be performed using such a continuum arm robot.

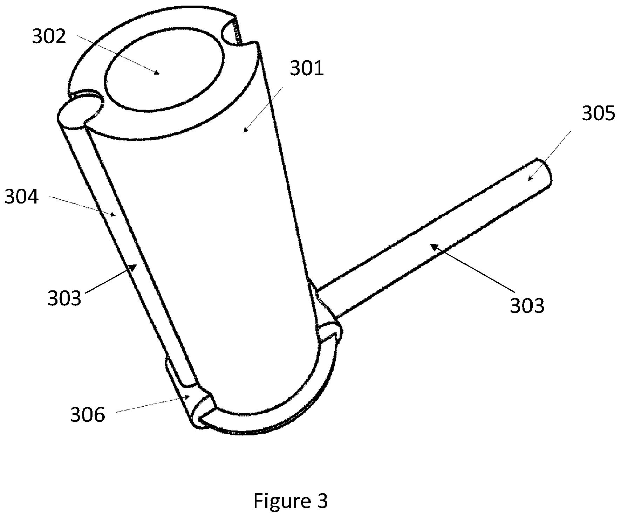

Figure 3 presents an example of a section of a compliant robot according to the present disclosure. The figure shows an example of an additional module that can be added onto a continuum robot to increase its strength. The strengthening feature consist of a rigid link 301 which has a hollow core 302 so that it can be fitted around the body of an existing compliant robot in order to strengthen it. This rigid link mechanism is shown having a pair of arms 303 that can be driven from a "closed" configuration 304 in which the arms are held along the body of the rigid link to an "open" configuration 305 in which the arms have been moved an appropriate distance from the rigid link. The arms may be controlled together. Alternatively, the arms may be individually controlled. This allows the arms to be individually deployable. The movement of the arms from the closed configuration to the open configuration allows the strengthening feature to create a point of contact with the environment of the workspace. The arms may open to any suitable degree. As such, the arms can be controlled so that they extend varying distances from the body of the compliant robot. If the arms are individually deployable, it may be the case that depending upon the work environment that one of the arms remains closed and the other is open, or alternatively that the arms are opened to different degrees, so as to better fit the workspace. The arms may be connected to the rigid link through the use of joints 306, which can be both rigid revolute or equivalent joints or compliant joints. The movement of the arms can be driven by cable operation of the joints or through any other suitable mechanism that would be apparent to the person skilled in the art. For example, this could be through the use of an electronic actuator, or through the use of material which is able to transition between one configuration and another such as a shape-memory alloy. The arms may have a sensor on them to help with positioning. The sensor may be a pressure sensor. The pressure sensor may provide feedback to the control mechanism so that once a certain force is exerted the arms do not open more. Although this has been presented as an add on addition to a continuum arm robot it is also possible to add this into the body of the compliant robot; this could be in the passive section and/or at the joining point between the passive section and the active compliant section. This has the advantage that the body of the rigid link and the arms can be made to have the same diameter as the active and passive compliant sections and as such minimises the chances of issues with catch or snagging the robot on insertion or removal of the robot into the work area. However, if the system is an add on unit such as that presented in figure 3 the external surface of the strengthening feature can be shaped so that it minimises the chance of catching or snagging by having smooth diameter transitions with the existing robot. The ends or the arms may also be compliant so that in their open state they do not damage the surface of the workspace. The arms on the rigid link may also be of differing lengths and /or thickness. There may also be multiple rigid link sections positioned along the length of the robot. In such a case, the arms may be used to scaffold the robot, that is to say open the arms on one side so as to elevate the robot from the surface of the workspace. If using more than one rigid link the arms can be different lengths and/or thicknesses on each of the arms.

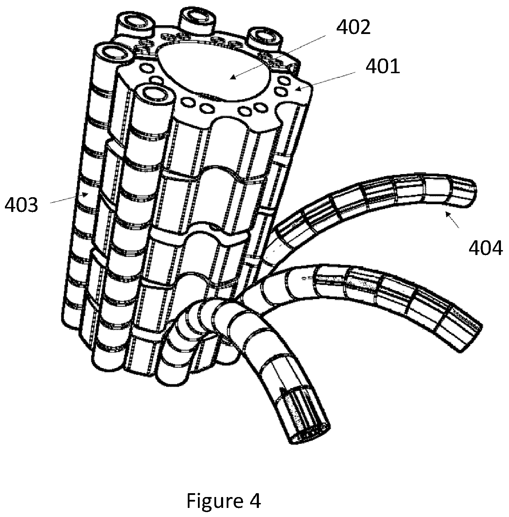

Figure 4 presents an alternative embodiment to the rigid link according to the present disclosure. In this example there are a plurality of arms that surround the rigid link. These may be individually controlled. Alternatively, they may be controlled together, or coupled together to be controlled. Like in the example shown in figure 3 the rigid link has a hollow core, such that it can be fitted around the outside of an existing robot or can be used as part of a new compliant robot as a new joint or link within its structure. In either case one or more of the rigid links may be provided at suitable points along the length of the robot to allow it to support itself. If using more than one supporting structure within a compliant robot each of the links may be addressed independently so that each can be activated and deactivated separately. Similarly, in any of the examples the arms can also individually activated such that they be deployed and retracted individually. In this way the deployment of the arms can be configured to suit the workpiece cavity within which the system is working. Figure 4 shows the presence of a plurality of arms attached to a snake-like segment or section. In this the rigid link 401 as a hollow core 402 and is designed to embed several arms. In this case the arms are shown as compliant tendrils rather than rigid arms which could also be employed. Figure 4 shows these tendrils in both a "closed" configuration 403 along the section and in an "open" configuration 404. The rigid link is constructed so that where the tendrils sit is within a hollow, so that the tendrils when in the retracted state sit within pockets on the rigid link so that they do not greatly increase the diameter of the compliant robot; this therefore reduces the chance of the rigid link catching or snagging on insertion or removal of the robot.

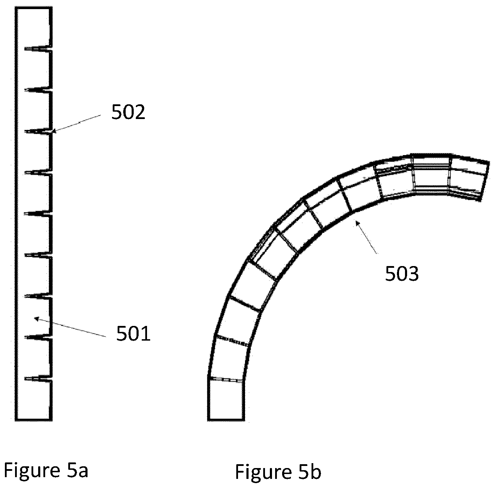

Figures 5a and 5b present an example of the tendril arms that are used in the example of the device as shown in figure 4 in their closed and open configurations respectively. The tendrils form compliant mechanisms which have shapes that can be controlled by a user. As such, they are advantageous over rigid arms which may not be able to activate fully so as to act as a support and as such do not provide such a strong hold. The compliant tendril mechanism 501 in this example is performed by placing notches 502 on a side of a tube that has elastic behaviour. An example of such a rod could be created through the use of Nitinol. The notches allow the rod to be deformed in shape so that they can curve 503 the tendril. The curvature within the tendril can caused by running a tendon or equivalent mechanism through it. Via this mechanism it is possible to control the shape of the tendril by modifying its curvature, as is shown in the configuration presented in figure 5a and the configuration presented in figure 5b. The tendrils may all be the same size. Alternatively, they can be of different length and/or thickness.

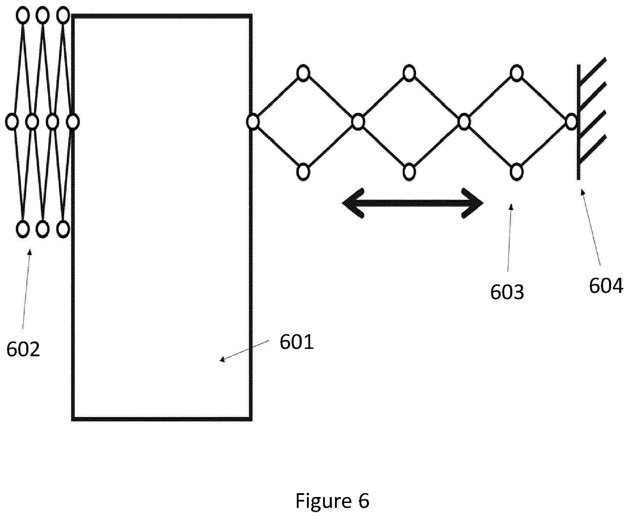

Figure 6 presents another example according to the present disclosure. In this example the arms are constructed of an expandable scaffold. The scaffold is able to be retracted 602 into the body of the robot 601. When the robot is in position the operator initiates the arms or arm to be deployed and to the extent that they are deployed 603, so that it is able to contact with the wall of the workspace 604. Once the task has been completed the arms are brought back into the body. In either the deployment the scaffold of the arms expands through either the use of an actuator cable or through the use an electronic system, such as an electronic actuator. As discussed, the deployment expands the joints in the scaffold so that it occupies a greater volume and as such is able to engage with the wall of the cavity into which the robot is inserted into. Similar to the other examples above, sensors may be used to determine the extent of opening of the folding structure. Also, a soft compliant pad may be used on the distal end to prevent damage to the workspace. The folding mechanism may be an origami mechanism, such as the example in Figure 6. In such a case the mechanism able to fold into the robot body as in configuration 602 and to unfold and extend to get in contact with the environment as in configuration 603.

Although the above is described in terms of a continuum arm robot the principle is applicable to any suitable flexible robot, e.g., compliant, horoscope, continuum arm. For example, the arms may be used to hold the head in position during a boroscoping process, or to maintain the body of a flexible robot away from the sides of the housing in which it is operating.

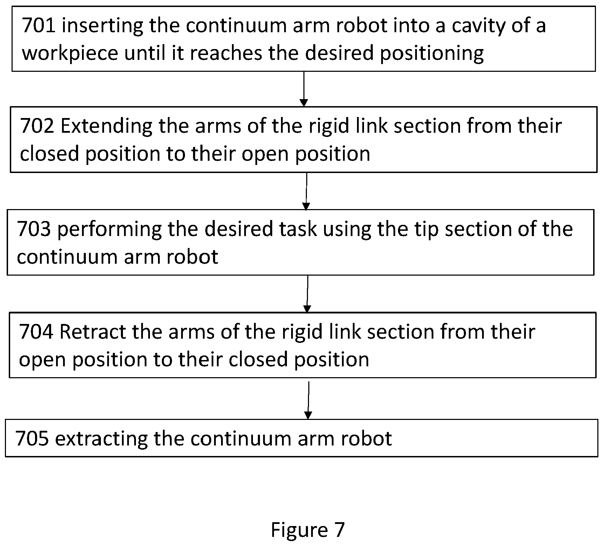

Figure 7 presents a flow chart of the operation of a compliant/flexible arm robot according to the present disclosure. In the first step 701 the robot is inserted into the workpiece cavity. This insertion may be through any suitable access port or hole within the workspace. In the second step 702, once the flexible arm robot is in position the arm/arms can be extended by the operator so that they touch the walls of the cavity so that the flexile arm robot is supported by the arms of the robot. In the third step 703, the robot performs the desired task that is required. In the fourth step 704, once the task is completed the arms of the robot are retracted. In the fifth step 705 the robot is removed from the cavity of the workpiece.

The above-described mechanism for fixturing and control of in-situ robotics can be distributed either uniformly or not around the central axis of the snake-like body. As discussed, this can either be incorporated into the body during the build phase or retrofitted as a later addition to the system. The use of a uniform distribution can produce improved balance for generic and/or unknown external loads; it can therefore, be more effective when the environment is known to have axial symmetry (e.g. robot for intervention in cylindrical pipes). On the other hand, a non-uniform distribution can be used to improve performance in situations where the loads are characterized by preferential directions (e.g., balancing the reaction force on the snake tip generated by an endeffector tool with a known push direction). Therefore, the choice of which design will be dependent upon the desired use and/or the environment into which the robot is inserted to perform the task. As discussed above the means of actuation for any of the examples may include any kind of motor, actuator or device that is able to generate a linear or rotational displacement within a narrow space. This type of drive could be selected for example from any one of the following pneumatics, hydraulics, linear/rotational motors, electromagnets, piezoelectric, shape-memory alloys etc...

The main application of this disclosure is to improve the stiffness and reaction of a robotic system to external and internal loads that are placed upon it. However, its uses are not limited to fixturing, since foldable auxiliary mechanisms could be used also to improve motion control or to generate motion by themselves (e.g., crawling motion).

This invention describes a mechanism which can be attached to an existing snake robotic or flexible arm robotic platform or within the structure of a new robot to provide additional stiffness. Such stiffening mechanisms are key in scenarios where the repair tool (such as a grinding ball) can provide significant reaction forces at the tip; this is because it allows the robot to maintain greater loading. The use of this mechanism means that the robot leverages itself against the surrounding environment to lock itself in position during the process. Alternatively, the arms may be used to constrain the robot, so as to limit the movement of the robot within certain axes of movement. It can therefore provide a means to overcome a reactionary force as a result of a mechanical task being performed by the head. An example of this is that the robot is inserted into an inspection hole within a gas turbine engine combustor section, the robot can leverage itself against the combustion tiles so that a machining process can be performed by a tool connected to the tip section. The arms of the device can subsequently be retracted to allow the device to be repositioned or retracted after the operation has been completed.

It will be understood that the invention is not limited to the embodiments above described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A rigid link for a flexible robot, the rigid link comprising a rigid link body having a hollow core, the rigid link being provided with at least two arms having proximal and distal ends, the arms are connected to the rigid link body, and wherein the arms being deployable between a closed configuration in which the proximal and distal ends of the arms are positioned proximate to the rigid link body and open configuration in which the arms are moved so that the distal ends of the arms are positioned away from the body of the rigid link.

2. The rigid link according to claim 1, wherein the proximal ends of the arms are pivotably connected to the body of the rigid link.

3. The rigid link according to claim 1 or claim 2, wherein the arms are tendrils have an elastic nature and can be shaped to curve when deployed.

4. The rigid link according to claim 3, wherein the tendrils are formed from nitinol and provided with notches along its length.

5. The rigid link according to any preceding claim, wherein the body of the rigid link is shaped so accommodate a portion of the arms along their length.

6. The rigid link according to claim 1, wherein the arms are extendable perpendicular to an axis parallel to the hollow core of the rigid link body.

7. The rigid link according to claim 6, wherein the arms are formed of a folding origami structure.

8. The rigid link according to any one of the preceding claims, wherein the arms are actuated by a motor, a tendon, or a linear actuator.

9. The rigid link according to any preceding claim, wherein the flexible robot is a continuum arm robot.

10. A rigid link according to claim 9, wherein the rigid link is incorporated into the body of the continuum robot.

11. A rigid link according to claim 9, wherein the rigid link is positioned around the outside body of a continuum arm robot.

12. A rigid link according to any preceding claim, wherein the arms are individually controllable.

13. A rigid link according to any one of the preceding claims, wherein the distal end of the arm is compliant, so as to not damage the surface of the workspace.

14. A method of operating a flexible arm robot having a rigid link according to any one of the preceding claims, comprising:
inserting the flexible arm robot into a cavity of a workpiece until it reaches the desired positioning;
deploying the arms of the rigid link section from their closed position to their open position;
performing the desired task using the tip section of the flexible arm robot;
retracting the arms of the rigid link section from their open position to their closed position;
and extracting the flexible arm robot.

15. The method of claim 14, wherein the after retracting the arms of the rigid link section, the flexible arm robot is repositioned and the arms are deployed to perform a further task before the arms are retracted again.
